# EUROPEAN PATENT SPECIFICATION

(11) **EP 2 294 924 B1**
(45) Date of publication and mention of the grant of the patent: **18.10.2017**
(21) Application number: 09012701.0
(22) Date of filing: 07.10.2009
(51) Int. Cl.: A23B 4/20, A23B 9/24, A23L 3/3517, A23K 20/105, A23K 30/00

(54) **Method for obtaining 1-monopropionine and its isomer 3-monopropionine as preserving agents for animal feed, grains and animal-origin flours**
Verfahren zur Herstellung von 1-Monopropionin und ihrem Isomer 3-Monopropionin als Konservierungsmitteln für Tierfutter, Korn und Mehl tierischen Ursprungs
Méthode d'obtention de 1-monopropionine et de son isomère 3-monopropionine en tant qu'agents de préservation pour l'alimentation animale, graines et farine d'origine animale

(30) Priority: 17.08.2009 BR PI0902564
(43) Date of publication of application: 16.03.2011
(73) Proprietor: Auster Nutricao Animal Ltda, Hortolândia 13.185-000 (BR)
(72) Inventor: De Lima Portilho, Paulo, Roberto, D'Oeste SP (BR)
(74) Representative: Lorente Berges, Ana

(56) References cited:
- WO-A2-2006/116364
- CA-A1- 1 168 078
- JP-A- 57 005 679
- DATABASE WPI Week 198719 Thomson Scientific, London, GB; AN 1987-134020 XP002616467, & SU 1 251 845 A (MEAT IND RES INST) 23 August 1986 (1986-08-23)
- DATABASE FSTA [Online] INTERNATIONAL FOOD INFORMATION SERVICE (IFIS), FRANkFURT-MAIN, DE; POTAVINA V S ET AL: "Comparative evaluation of additives preventing bread spoilage. (translated)", XP002616468, Database accession no. FS-1982-01-M-0032
- DATABASE FSTA [Online] INTERNATIONAL FOOD INFORMATION SERVICE (IFIS), FRANkFURT-MAIN, DE; LYUSHINSKAYA I I ET AL: "Methods for preventing of bread moulding. (translated)", XP002616469, Database accession no. FS-1985-10-M-0083
- DATABASE FSTA [Online] INTERNATIONAL FOOD INFORMATION SERVICE (IFIS), FRANkFURT-MAIN, DE; KUZNETSOVA L S ET AL: "Microflora on cocoa bean husks. (translated)", XP002616470, Database accession no. FS-1985-07-K-0001
- DATABASE WPI Week 198030, Derwent Publications Ltd., London, GB; AN 1980-52730C & SU 701 631 A (GORYAKOV M I) 08 December 1979

## Description

### Presentation

The present invention refers to the technical field of animal food products, more specifically a 1-monopropionine compound and its isomer 3-mozaopropionine as preserving agents for animal feed, grains and animal-origin flours, with the object to reduce the contamination by deleterious fungi, yeasts and bacteriae (especially *Salmonella spp* and *Coli spp*) in animal feed, grains and animal-origin flours, and consequently enhance the growth of the animal by means of practically contaminant-free food.

### Background

The use of organic acids as preserving agents for animal feed, grains and animal-origin flours has been known for long. However, there are great inconveniences caused by the use of said technology, among which: the corrosiveness of said chemical agents, their volatility and, in some cases, mucosa irritation which may be caused in operators of manufacturing processes.

### State of the art

The vast majority of natural product applications to reduce microbiological contamination in animal feed, grains and animal-origin flours is made with pure organic acids or their corresponding salts of calcium, sodium or ammonium (e. g. ammonium propionate, calcium propionate potassium formate and others). The use of monopropionine as a preserving agent is known from CA1168078 and SU701631. The latter document also discloses a method for obtaining monopropionine.

### Problems and difficulties in the state of the art

The action of pure acids is intense against bacteriae, fungi and yeasts, but is followed by great corrosiveness and risk, both for the equipments used mid for their operators. This problem is partially solved when salts of acids are used, but their activity is 100 to 1000 times lower than their corresponding acids (e. g. propionic acid in comparison with calcium propionate).

### Featured-enhancements

Bearing in mind the demand to solve the presented problems, pure organic acids or their corresponding salts of calcium have been substituted with a non-corrosive, non-volatile and absolutely safe compound for processing equipment of animal feed, grains and animal-origin flours. They are also more efficient to control bacterial and fungal growth than equivalent doses of equivalent commercial products based on propionic acid or its ammonia salt.

The enhancement offered by the compound over the control of bacterial and fungal growth may be proven by means of experimental data, wherein samples of animal feed were produced under different concentrations of antimicrobial preserving agents and submitted to fungal challenge (inoculation with spores) and bacterial challenge (inoculation with bacteriae) with later analysis to verify the reduction or not of fungal and bacterial load.

### Disclosure of the invention

The invention concerns a method for obtaining a preserving agent comprising 1-monopropionine and 3-monopropionine. Further described is the application of a 1-monopropionine compound and its isomer 3-monopropionine as preserving agents for animal feed, grains and animal-origin flours.

Monopropionine is obtained by the reaction process of esterification of propionic acid on position 1 or 3 of carbon in glycerol, undertaken at a high temperature of 280 °C and under vacuum. This is a translucent viscous liquid with low melting point (8 °C), preferably containing between 25% and 52% of propionic acid in its final constitution. This product may be used both pure and diluted in other liquids, or even sprayed on an absorbing substance (usually highly active clay or silica) to obtain a powdered product.

Objects, advantages and further important characteristics of the invention at issue may be more easily understood when read jointly with the formulation and obtaining process.

### Detailed description of the invention

The present invention concerns a method as defined in the claim. Further described herein is a preserving agent for food products for animals, being comprised by a monopropionine compound as applied over animal feed, grains and animal-origin flour, having the following preferential mixtures:
- 0.05 to 1% of the monopropionine compound in the quantity of the animal feed mixture;
- more preferably, 0.1 to 0.3% of the monopropionine compound in the quantity of the animal feed mixture;
- 0.05 to 1% of the monopropionine compound in the quantity of the mixture of grains;
- more preferably, 0.1 to 0.3% of the monopropionine compound in the quantity of the mixture of grains;
- 0.05 to 1% of the monopropionine compound in the quantity of the mixture of animal-origin flours;
- more preferably, 0.1 to 0.3% of the monopropionine compound in the quantity of the mixture of animal-origin flours;

However, measurements, quantities and values may vary according to the requirements of use and type of animal feed, grains and animal-origin flours, as long as the same characteristics are maintained.

The monopropionine compound may be:
- distilled monopropionine with 30% to 55% propionic acid in glycerol;
- monopropionine with 30% to 42% propionic acid with 6% to 12% tree acid in glycerol;
- monopropionine with 30% to 42% propionic acid and 6% to 12% sodium propionate in glycerol;
- monopropionine with 30% to 42% propionic acid and 6% to 12% potassium propionate in glycerol; and
- monopropionine with 25% to 42% propionic acid and 6% to 12% ammonium propionate in glycerol.

Monopropionine might be mixed with the final product in pure form or even diluted in glycerol or water (liquids), combined with ammonia, sodium or potassium salts of propionic acid (liquid) and adsorbed with silica (powder).

The mixture of monopropionine compound with animal feeds, grains or animal-origin animal feeds is made in traditional mixers, following previously determined dosages.

The preserving agent obtained by the method of the present invention reduces the contamination by deleterious fungi, yeasts and bacteriae in animal feeds, grains and animal-origin flours, consequently enhancing animal growth by means of practically contaminant-free feed.

All these properties allow to classify the 1-monopropionine compound and its isomer 3-monopropionine as preserving agents for animal feed, grains and animal-origin flour, a fully efficient and safe product for use to produce animal feeds, to protect grains and animal-origin flours and presenting excellent quality in final products. Therefore, the monopropionine compound will be well received by animal food product industries, which will be able to improve the quality of final products.

## Claims

1. A method for obtaining a preserving agent comprising 1-monopropionine and 3-monopropionine, the method comprising a reaction process of esterification of propionic acid on position 1 or 3 of carbon in glycerol, undertaken at 280ºC and under vacuum.

## Patentansprüche

1. Verfahren zum Erhalten eines Konserviermittels aufweisend 1-Monopropionin und 3-Monopropionin, wobei das Verfahren ein Reaktionsverfahren der Veresterung von Propansäure an Position 1 oder 3 von Kohlenstoff in Glycerin aufweist, vorgenommen bei 280°C und unter Vakuum.

## Revendications

1. Procédé pour l'obtention d'un agent conservateur compromettant la 1-monopropionine et la 3-monopropionine, opération comprenant un procédé de réaction de l'estérification de l'acide propionique sur la position 1 ou 3 du carbone dans le glycérol, traité à 280 °C et sous vide.
